# FASCICULE DE BREVET EUROPEEN

(11) **EP 0 948 443 B1**
(45) Date de publication et mention de la délivrance du brevet: **10.04.2002**
(21) Numéro de dépôt: 98954527.2
(22) Date de dépôt: 05.11.1998
(51) Int. Cl.: B64D 27/26

(54) **DISPOSITIF D'ACCROCHAGE D'UN MOTEUR SUR UN AERONEF**
TRIEBWERKAUFHÄNGUNGVORRICHTUNG AN EINEM LUFTFAHRZEUG
DEVICE FOR LOCKING AN ENGINE ON AN AIRCRAFT

(30) Priorité: 06.11.1997 FR 9713966
(43) Date de publication de la demande: 13.10.1999
(73) Titulaire: AEROSPATIALE Société Nationale Industrielle, 75781 Paris Cédex 16 (FR)
(72) Inventeur: LE BLAYE, Sébastien, F-31620 Villaudric (FR); CANADAS, Marc, F-31200 Toulouse (FR)
(74) Mandataire: Poulin, Gérard
(86) Numéro de dépôt international: FR9802371
(87) Numéro de publication internationale: WO9924320

(56) Documents cités:
- EP-A- 0 431 800
- EP-A- 0 583 158
- EP-A- 0 741 074
- EP-A- 0 805 108

## Description

### Domaine technique

L'invention concerne un dispositif d'accrochage d'un moteur sous les ailes ou contre le fuselage d'un aéronef.

De façon plus précise, l'invention concerne un dispositif d'accrochage chargé de reprendre les efforts latéraux et verticaux, ainsi que le couple moteur, engendrés par le moteur, afin de les retransmettre à l'aéronef.

### Etat de la technique

Les moteurs qui équipent les aéronefs sont suspendus ou accrochés latéralement à un pylône fixé sous la voilure ou sur le fuselage de l'aéronef.

La liaison entre le moteur et le pylône est assurée par des systèmes généralement constitués par deux ou trois dispositifs d'accrochage complémentaires, remplissant des fonctions bien distinctes.

L'un de ces dispositifs d'accrochage, qui fait l'objet de la présente invention, a pour fonction de reprendre les efforts latéraux et verticaux, ainsi que le couple moteur, engendrés par le moteur, afin de les retransmettre à l'aéronef par l'intermédiaire du pylône. Ce dispositif d'accrochage peut être monté indifféremment à l'arrière ou à l'avant du moteur. Les dimensions des différentes pièces sont adaptées en conséquence.

Comme l'illustrent notamment le brevet US-A-5 620 154 et le brevet US-A-5 275 357, certains des dispositifs d'accrochage existants comportent une structure d'accrochage principale et une structure d'accrochage de secours. La structure d'accrochage principale assure la transmission des efforts lors du fonctionnement normal, c'est-à-dire lorsque toutes les pièces du dispositif d'accrochage sont intactes. La structure d'accrochage de secours est prévue pour assurer la continuité de la fonction de transmission des efforts entre le moteur et l'avion, afin de ne pas perdre le moteur, en cas de rupture de l'une des pièces de la structure d'accrochage principale.

Dans ces dispositifs d'accrochage existants, la structure d'accrochage principale comprend habituellement une ferrure intermédiaire, fixée au pylône par exemple au moyen de vis, ainsi qu'au moins deux bielles rotulées, assurant la liaison entre la ferrure et le moteur. Le montage rotulant des bielles sur la ferrure et sur le moteur permet d'éviter que le dispositif ne reprenne des efforts suivant l'axe longitudinal du moteur.

Comme l'illustrent également les documents précités, lorsque les dispositifs d'accrochage existants comprennent des structures d'accrochage de secours, celles-ci incluent des éléments additionnels, tels qu'une ou plusieurs bielles supplémentaires, interposés entre la ferrure intermédiaire et le moteur. Ces éléments additionnels ne reprennent normalement aucun effort lorsque les pièces de la structure d'accrochage principale sont en état de remplir leurs fonctions. A cet effet, les éléments additionnels présentent des jeux tels qu'ils ne reprennent aucun effort en fonctionnement normal.

Cependant, dans tous les dispositifs d'accrochage existants, les éléments additionnels qui forment la structure d'accrochage de secours sont toujours interposés entre la ferrure intermédiaire de la structure d'accrochage principale et le moteur. Par conséquent, une défaillance de cette ferrure intermédiaire est susceptible de remettre en cause l'intégrité du dispositif d'accrochage dans son ensemble, affectant ainsi gravement la sécurité de l'aéronef.

### Exposé de l'invention

L'invention a précisément pour objet un dispositif d'accrochage d'un moteur sur un pylône d'aéronef, conçu pour préserver l'intégrité de l'accrochage du moteur même en cas de défaillance de la ferrure intermédiaire de la structure d'accrochage principale.

Conformément à l'invention, cet objectif est atteint grâce à un dispositif d'accrochage d'un moteur sur un pylône d'aéronef, comprenant une structure d'accrochage principale incluant une ferrure intermédiaire apte à être fixée au pylône et au moins deux bielles rotulées aptes à relier la ferrure au moteur, ainsi qu'une structure d'accrochage de secours, présentant un jeu tel qu'elle ne reprend aucun effort en fonctionnement normal, ce dispositif étant caractérisé par le fait que la structure d'accrochage de secours est apte à relier directement le pylône au moteur, sans passer par la ferrure.

Du fait que la structure d'accrochage de secours relie directement le pylône au moteur sans passer par la ferrure intermédiaire, l'intégrité de la liaison entre le pylône et le moteur est préservée même en cas de rupture de la ferrure intermédiaire, quelle que soit l'origine de cette rupture (criques, oxydation, défaut du matériau, etc.). La transmission des efforts entre le moteur et l'aéronef continue alors à être assurée et la perte du moteur est évitée.

Dans une première forme de réalisation préférée de l'invention, la structure d'accrochage de secours comprend deux chapes aptes à être liées respectivement au pylône et au moteur, ainsi qu'un axe lié à l'une des chapes et présentant le jeu précité par rapport à l'autre chape. L'axe est alors orienté sensiblement parallèlement à l'axe longitudinal du moteur.

De préférence, les deux chapes comprennent alors une chape femelle et une chape mâle et l'axe est lié à la chape femelle.

La chape mâle peut alors être solidaire du pylône et traverser la ferrure sans aucun contact avec celle-ci.

Dans la première forme de réalisation préférée de l'invention, la ferrure comporte une semelle apte à être fixée au pylône par des moyens de fixation démontables tels que des vis, et des chapes d'extrémités sur lesquelles sont articulées les bielles rotulées. La chape mâle, solidaire du pylône, traverse alors une fenêtre pratiquée dans la ferrure entre les chapes d'extrémités.

Dans une deuxième forme de réalisation préférée de l'invention, la structure d'accrochage de secours comprend une bielle apte à être articulée respectivement sur le pylône et sur le moteur.

Dans ce cas, la structure d'accrochage de secours comprend avantageusement, de plus, une chape apte à être liée au moteur, et un premier axe lié à la chape de façon rotulante, traversant avec ledit jeu une première extrémité de la bielle et orienté sensiblement parallèlement à un axe longitudinal du moteur.

La bielle traverse alors la ferrure sans aucun contact avec celle-ci, et pénètre dans une fente du pylône, la structure d'accrochage de secours comprenant au moins un deuxième axe lié au pylône et traversant une deuxième extrémité de la bielle, parallèlement au premier axe.

Selon le cas, la structure d'accrochage de secours peut comprendre soit un seul, soit deux deuxièmes axes.

Lorsqu'un seul deuxième axe est prévu, des surfaces de butée sont formées sur la ferrure pour limiter le pivotement de la bielle autour de ce deuxième axe à un angle prédéterminé, de faible amplitude.

Lorsque deux deuxièmes axes sont prévus, ils sont situés sensiblement à une même distance du premier axe.

### Brève description des dessins

On décrira à présent, à titre d'exemples non limitatifs, des formes de réalisation préférées de l'invention, en se référant aux dessins annexés, dans lesquels :
- la figure 1 est une vue de face qui représente schématiquement un dispositif d'accrochage selon une première forme de réalisation de l'invention ;
- la figure 2 est une vue en perspective éclatée, illustrant les différentes pièces du dispositif d'accrochage de la figure 1 ;
- la figure 3 est une vue de face comparable à la figure 1, qui illustre schématiquement une deuxième forme de réalisation de l'invention ; et
- la figure 4 est une vue de face comparable aux figures 1 et 3, qui illustre schématiquement une variante de la deuxième forme de réalisation de l'invention.

### Description détaillée de formes de réalisation préférées

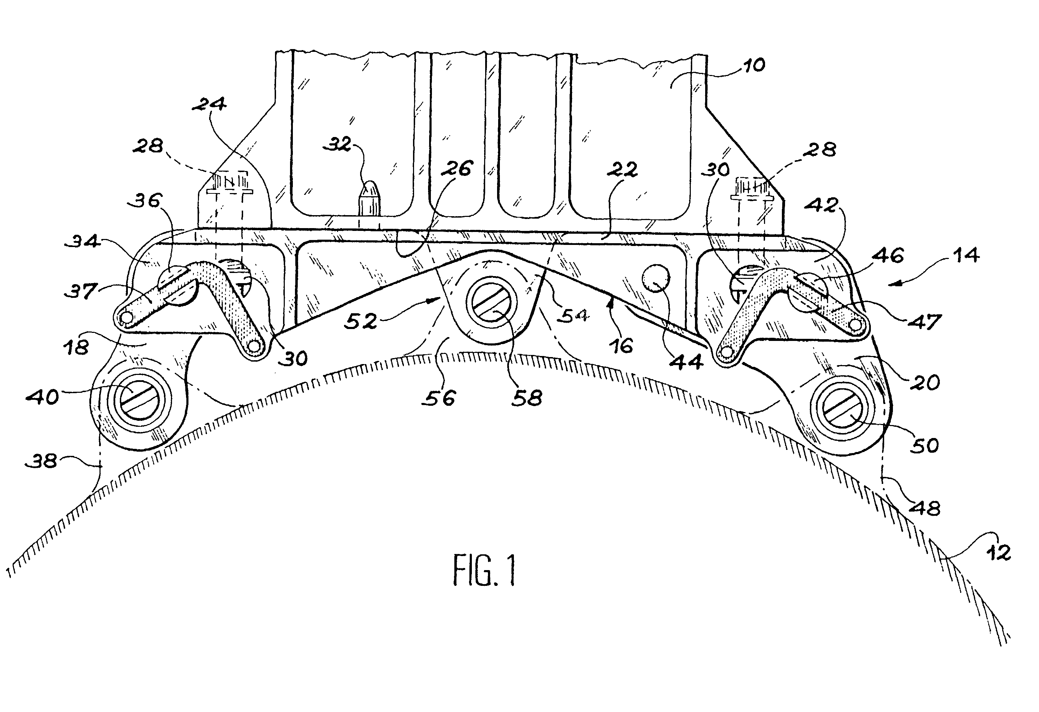

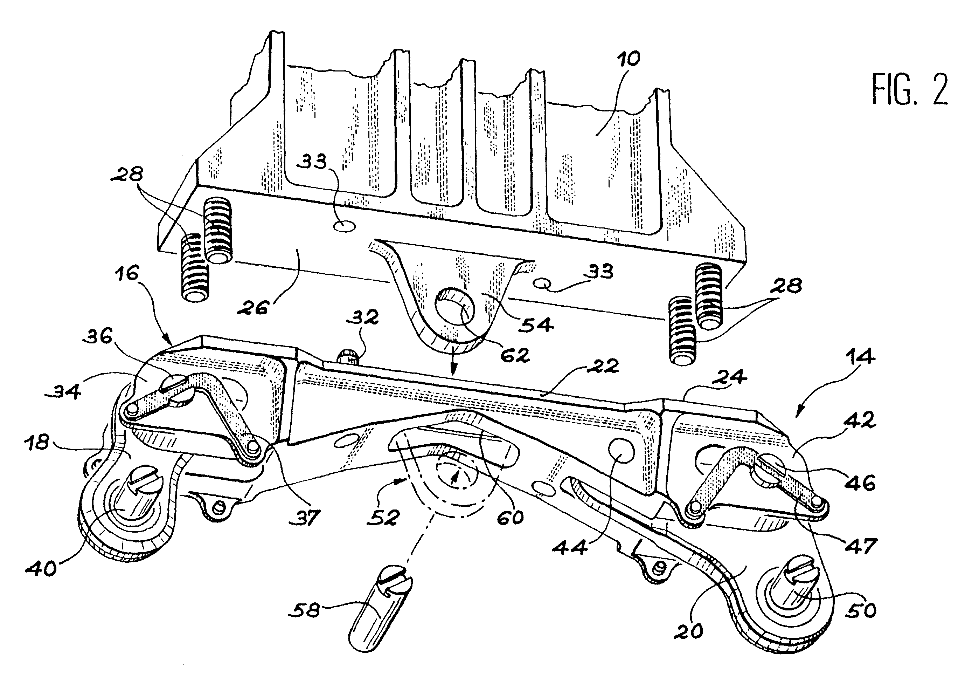

Sur les figures 1 et 2, la référence 10 désigne un pylône prévu pour être fixé, de façon connue, à une structure d'un aéronef, telle que la voilure ou le fuselage de celui-ci. Plus précisément, la référence 10 correspond à la partie du pylône conçue pour reprendre les efforts latéraux et verticaux ainsi que le couple moteur, engendrés par un moteur (non représenté), afin que ces efforts soient retransmis à l'aéronef par l'intermédiaire du pylône 10.

Par ailleurs, la référence 12 (figure 1) désigne une pièce faisant partie intégrante de la structure du moteur ou prévue pour être fixée sur cette structure selon des techniques connues, qui ne font pas partie de l'invention. Seule la partie de la pièce 12 adjacente au pylône 10 est illustrée, en traits mixtes, sur la figure 1.

Comme on l'a déjà observé, la pièce 12, par laquelle le moteur est accroché au pylône 10, peut être située indifféremment à l'avant ou à l'arrière du moteur.

La liaison entre le pylône 10 et la pièce 12 est assurée par un dispositif d'accrochage 14 conforme à l'invention. Il est rappelé que ce dispositif d'accrochage 14 a pour fonction de reprendre les efforts latéraux et verticaux, ainsi que le couple moteur, pour les transmettre à la structure de l'aéronef au travers du pylône 10. Tous les autres efforts sont transmis par d'autres dispositifs d'accrochage (non représentés) qui peuvent être réalisés selon différentes techniques connues et ne font pas partie de la présente invention.

Le dispositif d'accrochage 14 conforme à l'invention comprend une structure d'accrochage principale, qui assure la transmission de tous les efforts précités lorsque les différentes pièces qui le constituent ne sont pas endommagées, ainsi qu'une structure d'accrochage de secours destinée à suppléer la structure d'accrochage principale lorsque l'un quelconque des éléments qui la constitue est défaillant.

Dans la forme de réalisation illustrée sur les figures 1 et 2, la structure d'accrochage principale du dispositif d'accrochage 14 comprend une ferrure 16, une bielle latérale simple 18 et une bielle latérale à trois axes 20, appelée "boomerang" en raison de sa forme particulière.

La ferrure intermédiaire 16 comprend une semelle 22 qui présente une face plane 24 prévue pour être appliquée contre une face plane 26 du pylône 10. Lorsque le moteur est accroché sous la voilure de l'aéronef, la face plane 26 du pylône 10 est tournée vers le bas, comme l'illustre à titre d'exemple la figure 1.

La ferrure 16 est fixée sous le pylône 10 par des moyens de fixation comprenant, par exemple, quatre vis 28, vissées dans des écrous à barillets 30 noyés dans la ferrure intermédiaire 16. Plus précisément, les vis 28 traversent des trous en vis-à-vis usinés dans le pylône 10 et dans la ferrure 16 et leurs têtes viennent en appui contre des surfaces d'appui prévues sur le pylône 10, de façon à plaquer les surfaces planes 24 et 26 l'une contre l'autre lorsqu'elles sont vissées dans les écrous à barillets 30. Les moyens de fixation constitués par les vis 28 et les écrous à barillets 30 travaillent uniquement en traction.

Les efforts de cisaillement sont repris par ailleurs par deux doigts cylindriques 32, qui font partie intégrante de la semelle 22 de la ferrure intermédiaire 16 et dont un seul est visible sur les figures. Ces doigts cylindriques 32 font saillie sur la face plane 24 de la semelle 22, de façon à pénétrer, pratiquement sans jeu, dans des trous 33 (figure 2) usinés en vis-à-vis dans la face plane 26 du pylône 10.

A une première extrémité, la ferrure intermédiaire 16 comporte une chape femelle 34, dans laquelle est articulée de façon rotulante une première extrémité de la bielle latérale simple 18. Cette articulation rotulante est assurée par un axe 36 monté dans la chape femelle 34 et portant dans sa partie centrale une rotule (non représentée) logée dans l'extrémité correspondante de la bielle simple 18. Ce type d'assemblage est bien connu de l'homme du métier, de sorte qu'il n'en sera pas fait de description détaillée.

L'extrémité opposée de la bielle latérale simple 18 est également articulée par une liaison rotulante dans une chape femelle 38 (figure 1) qui fait partie intégrante de la pièce 12. Seul l'axe 40 de cette liaison rotulante est illustré sur les figures.

A son extrémité opposée, la ferrure intermédiaire 16 comprend une deuxième chape femelle 42, dans laquelle est reçue une branche de la bielle latérale à trois axes 20. Plus précisément, la bielle latérale à trois axes 20 est montée dans la chape femelle 42 par une liaison rotulante qui inclut deux axes 44 et 46 montés dans la chape 42, ainsi que des rotules (non représentées) montées dans la branche considérée de la bielle 20 et placées sur la partie centrale de chacun des axes 44 et 46.

L'extrémité de la branche de la bielle latérale à trois axes 20 située à l'extérieure de la chape femelle 42 coopère avec une chape femelle 48 (figure 1) solidaire de la pièce 12, par une articulation rotulante dont seul l'axe 50 est illustré sur les figures.

Les axes 36, 40, 44, 46 et 50 sont tous parallèles à l'axe longitudinal du moteur, qui est orienté perpendiculairement au plan de la figure 1. Ces axes peuvent être verrouillés sur des chapes femelles 34, 38, 42 et 48, par exemple au moyen de goupilles telles qu'illustré en 37 et 47 sur les figures.

L'ensemble formé par les deux bielles latérales 18 et 20 permet de bloquer le moteur en rotation autour de son axe longitudinal et de reprendre les efforts verticaux et latéraux.

La structure d'accrochage principale qui vient d'être décrite est une structure connue, qui peut être remplacée par toute structure mécaniquement équivalente remplissant les mêmes fonctions sous des formes différentes, sans sortir du cadre de l'invention.

L'originalité du dispositif d'accrochage conforme à l'invention réside dans la conception de la structure d'accrochage de secours, dont une première forme de réalisation préférée est désignée de façon générale par la référence 52 sur les figures 1 et 2.

Ainsi, conformément à l'invention, la structure d'accrochage de secours 52 relie directement le pylône 10 à la pièce 12, sans passer par la ferrure 16.

Dans la forme de réalisation illustrée sur les figures 1 et 2, la structure d'accrochage de secours 52 comprend une chape mâle 54 qui fait partie intégrante du pylône 10, une chape femelle 56, qui fait partie intégrante de la pièce 12, ainsi qu'un axe 58 traversant à la fois les chapes 52 et 54.

De façon plus précise, la chape mâle 54 fait saillie au centre de la face plane 26 du pylône 10 et elle traverse avec jeu une fenêtre 60 (figure 2) pratiquée dans la partie centrale de la semelle 22 de la ferrure intermédiaire 16.

Lorsque la pièce 12 est accrochée au pylône 10 par la structure d'accrochage principale décrite précédemment, la chape mâle 54 est reçue avec jeu dans la chape femelle 56 de la pièce 12. L'axe 58 est alors monté dans la chape femelle, de façon à traverser avec jeu un trou 62 (figure 2) de plus grand diamètre dans la chape mâle 54.

Grâce à l'agencement qui vient d'être décrit, il existe dans la structure d'accrochage de secours 52 des jeux suffisants pour que la chape mâle 54 ne soit jamais en contact avec la chape femelle 56, avec l'axe 58 ou avec tout autre élément du moteur lié à la pièce 12, lors d'un fonctionnement normal du dispositif d'accrochage. Ces jeux tiennent compte notamment de la dilatation et des mouvements du moteur par rapport aux différents organes de fixation.

En cas de rupture de l'une des deux bielles latérales 18 et 20, de l'un des axes 36, 40, 44, 46 ou 50, ou encore de l'une des chapes 38 et 48 de la pièce 12, la chape mâle 54 assure automatiquement la fonction d'accrochage et de passage des efforts avec la bielle latérale 18 ou 20 encore intègre. La ferrure 16 continue alors à transmettre les efforts au pylône 10, par l'intermédiaire des vis 28.

En cas de rupture d'une partie de la ferrure 16, les efforts peuvent transiter par les bielles latérales 18 et 20 et par la chape mâle 54, les efforts repris dans la ferrure 16 étant toujours retransmis au pylône 10 par l'intermédiaire des vis 28.

Enfin, en cas de défaillance totale de la ferrure 16, pouvant découler par exemple de mauvaises caractéristiques mécaniques ou autres, la chape mâle 54 est capable de maintenir le moteur en position sur le pylône 10, grâce à un dimensionnement correct, contrairement aux dispositifs d'accrochage connus, dans lesquels une défaillance totale de la ferrure est synonyme de perte du moteur.

En résumé, quel que soit le type de rupture de la structure d'accrochage principale du dispositif, le lien moteur-aéronef est toujours maintenu dans le dispositif d'accrochage conforme à l'invention.

Il est à noter, en outre, que le dispositif d'accrochage illustré sur les figures 1 et 2 est plus léger que les dispositifs existants, car il permet une liaison de secours directe entre le pylône 10 et la pièce 12, contrairement aux dispositifs existants qui utilisent des axes, bielles ou ferrures supplémentaires.

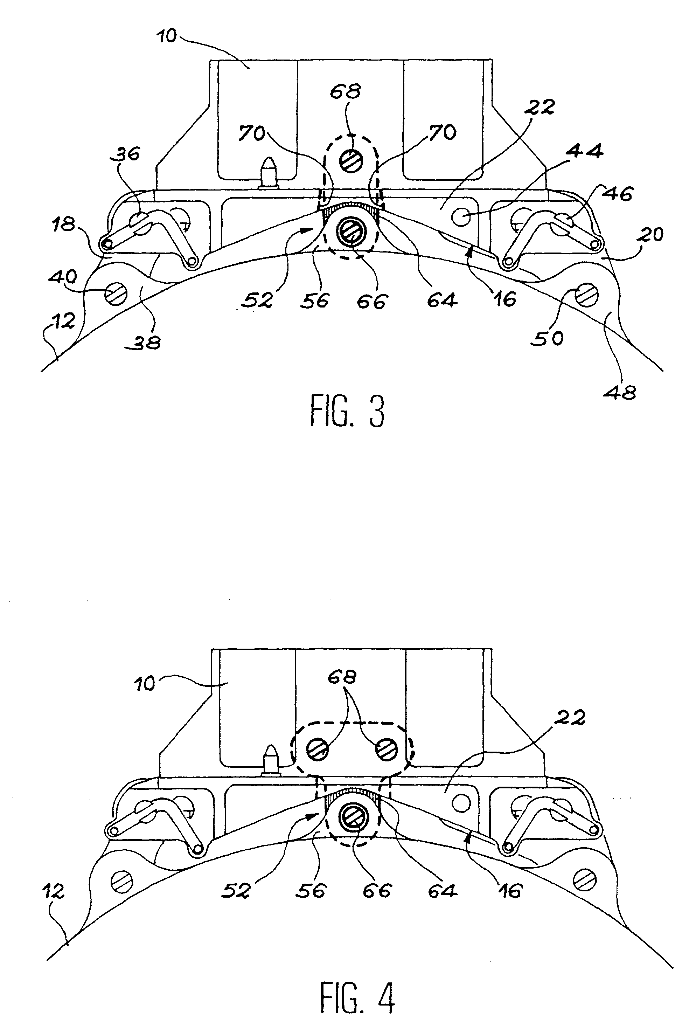

On décrira à présent, en se référant à la figure 3, une deuxième forme de réalisation du dispositif d'accrochage selon l'invention.

Comme dans la première forme de réalisation décrite, le dispositif d'accrochage comprend une structure d'accrochage principale et une structure d'accrochage de secours, toutes deux interposées entre le pylône 10 et la pièce 12.

La structure d'accrochage principale illustrée sur la figure 3 est identique à celle qui a été décrite précédemment en se référant aux figures 1 et 2. Il n'en sera donc pas fait de nouvelle description. Les mêmes références numériques sont utilisées pour désigner les mêmes pièces. Il est à noter que cette structure peut être remplacée par toute structure mécaniquement équivalente remplissant les mêmes fonctions, sans sortir du cadre de l'invention.

En revanche, la structure d'accrochage de secours, désignée comme précédemment par la référence 52, présente une forme différente.

Ainsi, la structure d'accrochage de secours 52 comprend, dans ce cas, une bielle 64 orientée sensiblement radialement par rapport à l'axe du moteur. Une première extrémité de la bielle 64 est articulée sur la pièce 12 par un premier axe 66 et une deuxième extrémité de la bielle est articulée sur le pylône 10 par un deuxième axe 68. Les axes 66 et 68 sont parallèles entre eux, ainsi qu'à l'axe longitudinal du moteur.

De façon plus précise, la structure d'accrochage de secours 52 comprend une chape femelle 56 qui fait partie intégrante de la pièce 12 et qui est située à mi-distance entre les chapes 38 et 48, comme dans la première forme de réalisation décrite. La première extrémité (basse) de la bielle 64 est reçue avec jeu dans la chape femelle 56. Le premier axe 66 est monté de façon rotulante dans la chape femelle 56 et traverse avec jeu un trou de plus grand diamètre formé dans la bielle 64.

La deuxième extrémité (haute) de la bielle 64 est reçue avec jeu dans une fente (non représentée) pratiquée dans le pylône 10 et faisant office de chape femelle. Le deuxième axe 68 est monté dans le pylône 10, de façon à traverser un trou de même diamètre formé dans la bielle 64.

Dans sa partie centrale, la bielle 64 traverse avec jeu une fenêtre pratiquée dans la partie centrale de la Semelle 22 de la ferrure intermédiaire 16, comparable à la fenêtre 60 sur la figure 2. Cette fenêtre définit deux surfaces de butée 70 contre lesquelles peut venir en appui la bielle 64, en cas de pivotement de celle-ci autour de l'axe 68, d'un angle prédéterminé, de faible amplitude.

Lorsque la structure d'accrochage principale n'est pas endommagée, la bielle 64 n'est pas travaillante.

Au contraire, dans l'hypothèse de rupture de l'une quelconque des pièces constituées par les bielles latérales 18 et 20, les axes 36, 40, 44, 46 et 50, les chapes 38 et 48, la ferrure 16 ou une partie de celle-ci, la bielle 64 devient travaillante. Elle assure alors automatiquement la fonction d'accrochage et de passage des efforts, comme les chapes 54 et 56 dans la première forme de réalisation décrite.

Par rapport à cette première forme de réalisation, la deuxième forme de réalisation illustrée sur la figure 3 présente l'avantage que la bielle rotulée 64 permet d'accommoder les déplacements relatifs entre le pylône 10 et le moteur, dus par exemple à des oscillations ou à l'expansion thermique du moteur. Les surfaces de butée 70 empêchent un mouvement pendulaire latéral d'amplitude trop importante.

Sur la figure 4, on a représenté une variante de la deuxième forme de réalisation de l'invention, qui ne diffère de celle-ci que par la forme de la bielle 64 et par son accrochage sur le pylône 10. Toutes les autres caractéristiques restant inchangées, aucune nouvelle description n'en sera faite.

Dans ce cas, au lieu de présenter la forme d'un I, la bielle 64 est en forme de T et elle est reliée au pylône 10 par deux deuxièmes axes 68, au lieu d'un seul.

De façon plus précise, la branche inférieure du T formée par la bielle 64 traverse une fenêtre pratiquée dans la partie centrale de la semelle 22 de la ferrure 16, et son extrémité est articulée de façon rotulante, avec jeu sur une chape femelle 56 qui fait partie intégrante de la pièce 12, au moyen d'un premier axe 66, de la même manière que sur la figure 3.

La deuxième extrémité (haute) de la bielle 64, formant la branche supérieure du T, est reçue avec jeu dans une fente (non représentée) pratiquée dans le pylône 10 et faisant office de chape femelle. Les deux deuxièmes axes 68 sont montés dans le pylône 10, de façon à traverser des trous de même diamètre formés dans les extrémités de ladite branche supérieure. Les deux deuxièmes axes 68 sont situés sensiblement à la même distance du premier axe 66, de façon à former avec celui-ci, en vue de face, un triangle isocèle.

Comme précédemment, les jeux qui sont prévus dans la liaison rotulante entre le moteur et la bielle 64 sont tels que cette dernière ne soit pas travaillante lors d'un fonctionnement normal du dispositif d'accrochage.

Dans les cas de défaillance envisagés précédemment pour la forme de réalisation de la figure 3, la bielle 64 devient travaillante et assure automatiquement la fonction d'accrochage et de passage des efforts, de la même manière que les chapes 54 et 56 dans la première forme de réalisation de l'invention.

La bielle 64 articulée permet alors de supporter les déplacements relatifs éventuels entre le pylône 10 et le moteur, causés par exemple par l'expansion thermique du moteur.

La variante de la figure 4 a, en outre, pour avantage de limiter les mouvements relatifs entre le pylône 10 et moteur, grâce aux deux points d'accrochage matérialisés par les axes 68, quand ces mouvements ont une amplitude propre à modifier la fonction d'accrochage et de passage des efforts. En d'autres termes, lors de mouvements de trop grande amplitude causés par la modification de la fonction d'accrochage, la forme de la bielle 64 limite le mouvement? et la dégradation de la fonction d'accrochage s'en trouve réduite. Les surfaces de butée 70 (figure 3) ne sont alors plus nécessaires.

Bien entendu, l'invention n'est pas limitée aux formes de réalisation qui viennent d'être décrite, mais en couvre, sans sortir du cadre de la revendication 1, tous les équivalents techniques remplissant les mêmes fonctions, quelles que soient leurs formes. Ainsi, dans la première forme de réalisation, les chapes mâle 54 et femelle 56 peuvent notamment être inversées. Dans ce cas, la chape mâle solidaire de la pièce 12 peut pénétrer dans une fente pratiquée dans le pylône 10 et faisant office de chape femelle. L'axe 58 traverse alors directement le pylône 10 au droit de cette fente.

## Revendications

1. Dispositif d'accrochage d'un moteur sur un pylône (10) d'aéronef, comprenant une structure d'accrochage principale incluant une ferrure intermédiaire (16) apte à être fixée au pylône (10) et au moins deux bielles rotulées (18,20) aptes à relier la ferrure (16) au moteur, ainsi qu'une structure d'accrochage de secours (52), présentant un jeu tel qu'elle ne reprend aucun effort en fonctionnement normal, ce dispositif étant **caractérisé par le fait que** la structure d'accrochage de secours (52) est apte à relier directement le pylône (10) au moteur, sans passer par la ferrure (16).

2. Dispositif selon la revendication 1, dans lequel la structure d'accrochage de secours (52) comprend deux chapes (54,56) aptes à être liées respectivement au pylône (10) et au moteur, et un axe (58) lié à l'une des chapes et présentant ledit jeu par rapport à l'autre chape, ledit axe étant orienté sensiblement parallèlement à un axe longitudinal du moteur.

3. Dispositif selon la revendication 2, dans lequel les deux chapes comprennent une chape femelle (56) et une chape mâle (54) et l'axe (58) est lié à la chape femelle.

4. Dispositif selon la revendication 3, dans lequel la chape mâle (54) est apte à être solidarisée du pylône (10) et traverse la ferrure (16) sans aucun contact avec celle-ci.

5. Dispositif selon la revendication 4, dans lequel, la ferrure (16) comportant une semelle (22) apte à être fixée au pylône (10) par des moyens de fixation démontables (28,30), et des chapes d'extrémités (32,42) sur lesquelles sont articulées les bielles rotulées (18,20), la chape mâle (54) solidaire du pylône (10) traverse une fenêtre (60) pratiquée dans la ferrure (16) entre les chapes d'extrémités (34,42).

## Claims

1. Device for the attachment of an engine to an aircraft strut (10), having a main attachment structure including an intermediate fitting (16) which can be fixed to the strut (10) and at least two swivelled rods (18, 20) able to connect the fitting (16) to the engine, as well as a standby attachment structure (52) having a clearance such that it does not take up any forces in normal operation, said device being **characterized in that** the standby attachment structure (52) is able to directly connect the strut (10) to the engine without passing via the fitting (16).

2. Device according to claim 1, wherein the standby attachment structure (52) comprises two yokes (54, 56), which can be respectively connected to the strut (10) and to the engine, and a pin (58) connected to one of the yokes and having said clearance with respect to the other yoke, said pin being oriented substantially parallel to a longitudinal axis of the engine.

3. Device according to claim 2, wherein the two yokes comprise a female yoke (56) and a male yoke (54) and the pin (58) is connected to the female yoke.

4. Device according to claim 3, wherein the male yoke (54) can be rendered integral with the strut (10) and traverses the fitting (16) without contacting the latter.

5. Device according to claim 4, wherein the fitting (16) has a base (22) fixable to the strut (10) by dismantlable fixing means (28, 30), and end yokes (32, 42) on which are articulated the swivelled rods (18, 20), the male yoke (54) integral with the strut (10) traversing a window (60) made in the fitting (16) between the end yokes (34, 42).

## Patentansprüche

1. Vorrichtung zur Aufhängung eines Triebwerks an einem Mast bzw. einer Stütze (10) eines Luftfahrzeugs, mit einer Haupt-Aufhängungsstruktur, die eine Zwischenarmierung bzw. einen Zwischenbeschlag (16), welche(r) an dem Mast (10) befestigt werden kann, und mindestens zwei Kugelgelenkglieder (18,20), die die Armierung bzw. den Bewchlag (16) mit dem Motor verbinden können, aufweist, sowie einer Hilfs-Aufhängungsstruktur (52), die ein Spiel hat, so daß sie bei normaler Funktion nicht beansprucht wird, wobei die Vorrichtung **dadurch gekennzeichnet ist, daß** die Hilfs-Aufhängungsstruktur (52) den Mast bzw. die Stütze (10) direkt mit dem Triebwerk unter Übergehung der Armierung (16) verbinden kann.

2. Vorrichtung nach Anspruch 1, wobei die Hilfs-Aufhängungsstruktur (52) zwei Kupplungsbügel bzw. -ansätze (chapes) (54,56), die mit dem Mast (10) bzw. dem Triebwerk verbunden werden können, sowie einen mit einem der Bügel verbundenen und das Spiel bezüglich des anderen Bügels aufweisenden Achsbolzen (58)umfaßt, wobei der Achsbolzen im wesentlichen parallel zu einer Längsachse des Triebwerks ausgerichtet ist.

3. Vorrichtung nach Anspruch 2, wobei die beiden Kupplungsbügel bzw. -ansätze einen weiblichen Bügel (56) und einen männlichen Bügel (54) umfassen und der Achsbolzen (58) mit dem weiblichen Bügel verbunden ist.

4. Vorrichtung nach Anspruch 3, wobei der männliche Bügel (54) einstückig mit dem Mast (10) gestaltet werden kann und durch die Armierung bzw. den Beschlag (16) ohne irgendeinen Kontakt mit dieser/diesem hindurchgeht.

5. Vorrichtung nach Anspruch 4, wobei die Armierung (16) eine über abnehmbare Befestigungsmittel (28,30) am Mast bzw. der Stütze (10) befestigbare Fußplatte (22) sowie Endkupplungsbügel (32,42), an denen die Kugelgelenkglieder (18,20) ausschwenkbar sind, umfaßt, wobei der mit dem Mast (10) einstückige männliche Bügel (54) durch ein in die Armierung (16) zwischen den Endbügeln (34,42) eingebautes Fenster (60) hindurchgeht.
